# EUROPEAN PATENT APPLICATION

(11) **EP 3 796 567 A1**
(43) Date of publication of application: **24.03.2021**
(21) Application number: 18923569.0
(22) Date of filing: 22.06.2018
(51) Int. Cl.: H04B 7/0408

(54) **WIRELESS COMMUNICATION SYSTEM, TERMINAL DEVICE, BASE STATION DEVICE, AND WIRELESS COMMUNICATION METHOD**

(71) Applicant: Mitsubishi Electric Corporation, Tokyo 100-8310 (JP)
(72) Inventor: NAKAMIZO, Hideyuki, Tokyo 100-8310 (JP); TAJIMA, Kenichi, Tokyo 100-8310 (JP); OKAZAKI, Akihiro, Tokyo 100-8310 (JP); UCHIDA, Shigeru, Tokyo 100-8310 (JP); FUKUI, Noriyuki, Tokyo 100-8310 (JP)
(74) Representative: Pfenning, Meinig & Partner mbB
(86) International application number: PCT/JP2018/023838
(87) International publication number: WO 2019/244348

(57) **Abstract**

Abase station device (1) that forms a plurality of beams TB necessary for covering the entire service area and transmits a communication signal in a time-division manner with each of the plurality of beams TB, and a terminal device (2) that receives the beams TB emitted from the base station device (1) are included. Communication from the base station device (1) to the terminal device (2) is performed with a beam-forming technique. The terminal device (2) compares the received power value of the communication signal in each of the plurality of beams TB received from the base station device (1) with the terminal allowable power value of the terminal device (2), and, on the basis of the comparison result, transmits a specific signal for selecting a beam TB from the plurality of beams TB to the base station device (1). The base station device (1) receives the specific signal from the terminal device (2), selects a beam TB from the plurality of beams TB in accordance with a beam select signal based on the received specific signal, and transmits a communication signal with the selected beam in a time-division manner.

## Description

### TECHNICAL FIELD

The present invention relates to a wireless communication system, a terminal device, a base station device, and a wireless communication method that conduct communication using a beam-forming technique.

### BACKGROUND ART

As for a wireless communication system that conducts communication between a base station device and a plurality of terminal devices, there is a known wireless communication system in which a base station device transmits a wide-angle beam capable of covering a predetermined area, and a plurality of terminal devices receives the beam.

Meanwhile, to achieve a larger capacity and a higher speed, there is a wireless communication system designed to conduct communication using a beam-forming technique for reducing radio wave interference between a base station device and a terminal device and sending radio waves to a farther place. The beam-forming technique is a technique by which radio waves (beams) are narrowed and are emitted in a specific direction in a concentrative manner.

A wireless communication system that conducts communication using a beam-forming technique is disclosed in Prior Art Document 1, for example.

In the wireless communication system disclosed in Prior Art Document 1, a base station device forms a plurality of beams with respective different maximum emission directions, and performs transmission. A terminal device receives the plurality of beams from the base station device, and selects and receives an optimal one from among the beams. The selection criteria at this point of time are (1) to select and receive a signal with the highest received signal strength among the signals in the beams that have arrived, and (2) to select and receive a signal with the highest signal-to-noise ratio (S/N ratio) among the received signals in the beams that have arrived.

### CITATION LIST

### PATENT LITERATURE

Patent Literature 1: JP H9-74375 A

### SUMMARY OF INVENTION

### TECHNICAL PROBLEM

The wireless communication system disclosed in Patent Literature 1 exhibits a technique for selecting a signal with the highest received signal strength or the highest S/N ratio in a terminal device. However, in a case where a terminal device is located in proximity to a base station device, and the terminal device selects and receives higher electric power than the upper limit value of the terminal allowable power value of the terminal device on the basis of selection criteria, the terminal device is saturated, and desired communication performance cannot be achieved.

The present invention is to solve the above problem, and aims to obtain a wireless communication system that can prevent a beam whose received power value is higher than the upper limit value of the terminal allowable power value from reaching a terminal device, the reception unit in the terminal device from being saturated, and communication performance from being degraded.

### SOLUTION TO PROBLEM

A wireless communication system according to the present invention includes: a base station device for forming a plurality of beams necessary for covering the entire service area, and transmitting a communication signal with each of the plurality of beams in a time-division manner; and a terminal device for receiving the beams emitted from the base station device. In the wireless communication system, communication from the base station device to the terminal device is performed with a beam-forming technique. The terminal device compares a received power value of the communication signal in each of the plurality of beams received from the base station device with the terminal allowable power value of the terminal device, and, on the basis of the comparison result, transmits a specific signal for selecting a beam from the plurality of beams, to the base station device. The base station device receives the specific signal from the terminal device, selects a beam from the plurality of beams in accordance with a beam select signal based on the received specific signal, and transmits a communication signal with the selected beam in a time-division manner.

### ADVANTAGEOUS EFFECTS OF INVENTION

According to the present invention, the reception unit in a terminal device is not saturated in response to a communication signal in a beam emitted from a base station device, and as a result, the terminal device can perform valid communication with the base station device, without impairing communication performance of the terminal device.

### BRIEF DESCRIPTION OF DRAWINGS

FIG. 1 is a schematic configuration diagram showing a wireless communication system according to a first embodiment of the present invention.
FIG. 2 is a schematic diagram showing, as Example 1, a state in which a beam TB11 is emitted while a beam TB12 is stopped in a time slot T1 in the wireless communication system according to the first embodiment of the present invention.
FIG. 3 is a schematic diagram showing, as Example 1, a state in which the beam TB12 is emitted while the beam TB11 is stopped in a time slot T2 in the wireless communication system according to the first embodiment of the present invention.
FIG. 4 is a diagram showing a time chart showing that the beam TB11 and the beam TB12 are emitted twice in a time-division manner in Example 1 in the wireless communication system according to the first embodiment of the present invention.
FIG. 5 is a diagram showing the relationship of the received power values of a terminal device 2 to the beam TB11 and the beam TB12 in Example 1 in the wireless communication system according to the first embodiment of the present invention.
FIG. 6 is a schematic diagram showing, as Example 2, a state in which a beam TB21 is emitted while a beam TB22 is stopped in a time slot T1 in the wireless communication system according to the first embodiment of the present invention.
FIG. 7 is a schematic diagram showing, as Example 2, a state in which the beam TB22 is emitted while the beam TB21 is stopped in a time slot T2 in the wireless communication system according to the first embodiment of the present invention.
FIG. 8 is a schematic diagram showing, as Example 2, a state in which the beam TB21 and the beam TB22 are simultaneously emitted in a time slot T3 in the wireless communication system according to the first embodiment of the present invention.
FIG. 9 is a diagram showing a time chart showing that the beam TB11 and the beam TB12 are emitted three times in a time-division manner in Example 2 in the wireless communication system according to the first embodiment of the present invention.
FIG. 10 is a diagram showing the relationship of the received power values of a terminal device 2a to the beam TB11 and the beam TB12 in Example 2 in the wireless communication system according to the first embodiment of the present invention.
FIG. 11 is a diagram showing the relationship of the received power values of a terminal device 2b to the beam TB11 and the beam TB12 in Example 2 in the wireless communication system according to the first embodiment of the present invention.
FIG. 12 is a diagram showing the relationship of the received power value of a terminal device 2c to the beam TB12 in Example 2 in the wireless communication system according to the first embodiment of the present invention.
FIG. 13 is a schematic configuration diagram showing a wireless communication system according to a second embodiment of the present invention.

### DESCRIPTION OF EMBODIMENTS

To explain the present invention in greater detail, modes for carrying out the invention are described below with reference to the accompanying drawings.

### First Embodiment

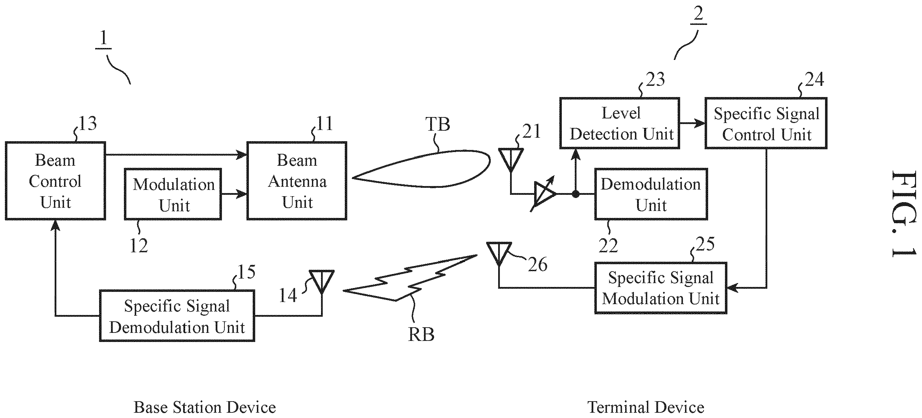

A wireless communication system according to a first embodiment of the present invention is now described with reference to FIG. 1. The wireless communication system includes a base station device 1 and a plurality of terminal devices 2. Communication from the base station device 1 to the plurality of terminal devices 2 is performed with a beam-forming technique. In the service area to be covered, the base station device 1 forms a plurality (M) of beams TB necessary for covering the entire service area, and transmits communication signals with the beams TB in a time-division manner.

The formation of the plurality (M) of beams TB necessary for covering the entire service area is conducted with N beams that can be simultaneously emitted. In a case where N is 1, a single beam is used. In a case where N is 2 or greater, a single beam or simultaneous multiple beams are used.

The base station device 1 includes a beam antenna unit 11, a modulation unit 12, a beam control unit 13, a specific signal demodulation unit 15, and an ID receiving antenna 14.

The beam antenna unit 11 includes a transmitting antenna that emits a plurality of beams TB that cover different areas in the service area in a time-division manner. In a case where a plurality of beams TB cannot be formed simultaneously, a plurality of beams TB is individually formed in a time-division manner. In a case where a plurality of beams TB can be formed simultaneously, the plurality of beams TB is formed individually and simultaneously in a time-division manner. In FIG. 1, one beam TB is shown as a typical example.

The communication signal in each beam TB includes communication data and an identification signal ID indicating individual information given to the corresponding beam TB.

The beam antenna unit 11 receives communication data input from the modulation unit 12, and adds the identification signal ID corresponding to the beam TB to be formed, to the input communication data. In accordance with an input beam select signal, the beam antenna unit 11 further selects the beam TB to be formed from a plurality of beams TB, and, with the selected beam TB, transmits a communication signal containing the communication data and the identification signal ID corresponding to the selected beam TB.

During communication quality measurement, the beam antenna unit 11 also forms a plurality of quality measuring beams TB in a time-division manner for all of the respective plurality of beams TB necessary for covering the entire service area. A communication quality measuring signal and identification signals ID corresponding to the plurality of beams TB are transmitted with the respective quality measuring beams TB. The communication quality measuring signal does not need to be a special-purpose signal, and may be communication data sent from the modulation unit 12. In this case, it is only required to add a code bit indicating a communication quality measuring signal. Further, if the terminal device 2 is designed to measure the communication quality at the start of communication with the base station device 1, the base station device 1 does not need to do anything special for the communication quality measurement. In the first embodiment, as an example, a communication quality measurement period is set at the start of communication on the side of the terminal devices 2, and the quality measuring beams TB are assumed to be normal beams TB.

Note that the modulation unit 12 is normally used in this kind of technical field, and the configuration of the stage before the modulation unit 12 is also normally used in this kind of technical field. Therefore, explanation of them is not made herein.

The beam control unit 13 receives a demodulated beam specific signal from the specific signal demodulation unit 15, and outputs a beam select signal based on the demodulated beam specific signal to the beam antenna unit 11. That is, the beam control unit 13 causes the beam antenna unit 11 to selectively control the beam TB to be formed.

The ID receiving antenna 14 receives a modulated specific signal transmitted from a terminal device 2.

The specific signal demodulation unit 15 demodulates the modulated specific signal received via the ID receiving antenna 14. The demodulated specific signal is output to the beam control unit 13.

The specific signal is a signal formed by adding a validity determination signal to the identification signal corresponding to a quality measuring beam TB received by the terminal device 2. The validity determination signal indicates that the power value of the received quality measuring beam TB is valid for communication when the power value is equal to or smaller than the terminal allowable power value of the terminal device 2 during communication quality measurement. Alternatively, the specific signal is a signal formed by adding an invalidity determination signal to the identification signal corresponding to a quality measuring beam TB received by the terminal device 2. The invalidity determination signal indicates that the power value of the received quality measuring beam TB is invalid for communication when the power value is greater than the terminal allowable power value of the terminal device 2.

When the specific signal is a signal to which the validity determination signal has been added, the beam control unit 13 outputs, to the beam antenna unit 11, a beam select signal for selecting the beam TB corresponding to the identification signal for the beam TB included in the specific signal, and deselecting the other beams TB. The beam antenna unit 11 forms the beam TB selected by the beam select signal.

At this point of time, in a case where there is a plurality of specific signals to each of which a validity determination signal has been added, the beam control unit 13 may output a beam select signal for selecting all the beams TB corresponding to the identification signals for the beams TB included in the respective specific signals, or may output a beam select signal for selecting one or more beams from among the beams TB corresponding to the identification signals for the beams TB and deselecting the other beams TB.

When the specific signal is a signal to which the invalidity determination signal has been added, on the other hand, the beam control unit 13 outputs, to the beam antenna unit 11, a beam select signal for selecting one or more beams from the beams TB other than the beam TB corresponding to the identification signal for the beam TB included in the specific signal, and deselecting the other beams TB. The beam antenna unit 11 forms the beam TB selected by the beam select signal.

The terminal device 2 is a mobile terminal device, and includes a beam receiving antenna 21, a demodulation unit 22, a level detection unit 23, a specific signal control unit 24, a specific signal modulation unit 25, and an ID transmitting antenna 26.

The beam receiving antenna 21 receives beams TB formed at the beam antenna unit 11 of the base station device 1. The demodulation unit 22 demodulates communication data in the received beams TB.

Note that the demodulation unit 22 is normally used in this kind of technical field, and the configuration of the stage after the demodulation unit 22 is also normally used in this kind of technical field. Therefore, explanation of them is not made herein.

In the first embodiment, when the terminal device 2 starts communication with the base station device 1, a communication quality measurement period is set.

During the communication quality measurement period, the beam receiving antenna 21 receives beams TB that have been formed in a time-division manner at the beam antenna unit 11 of the base station device 1. Not having received any specific signal from the terminal device 2 at the beginning of the communication quality measurement period, the base station device 1 forms a plurality of beams TB necessary for covering the entire service area in a time-division manner, and emits the beams TB.

The level detection unit 23 measures the received power values of communication signals for all the respective beams TB that have been emitted from the beam antenna unit 11 and are necessary for covering the entire service area, associates the received power values corresponding to the respective beams TB with the identification signals ID corresponding to the beams TB, and outputs the received power values to the specific signal control unit 24.

The specific signal control unit 24 compares the received power values corresponding to the input beams TB with the terminal allowable power value of the terminal device 2, and generates a specific signal for selecting a beam TB from among the beams TB that are formed at the base station device 1 and are necessary for covering the entire service area. The received power values for all of the respective beams TB that are formed at the base station device 1 and are necessary for covering the entire service area are compared with the terminal allowable power value.

The specific signal is a signal formed by adding a validity determination signal to the identification signal corresponding to a received beam TB. The validity determination signal indicates that the received power value is valid for communication when the received power value is equal to or smaller than the terminal allowable power value. Alternatively, the specific signal is a signal formed by adding an invalidity determination signal to the identification signal corresponding to a received quality measuring beam TB. The invalidity determination signal indicates that the received power value is invalid for communication when the received power value is greater than the terminal allowable power value. At the same time, the terminal individual signal of the terminal device 2 is added to the specific signal.

The specific signal which has been generated by the specific signal control unit 24 and to which the validity determination signal or the invalidity determination signal is added is modulated at the specific signal modulation unit 25, and is emitted as a beam RB from the ID transmitting antenna 26, so that the modulated specific signal is received at the ID receiving antenna 14 of the base station device 1.

In this manner, the specific signal is transmitted from the terminal device 2, and the base station device 1 that has received the specific signal selects and forms a beam TB among the beams TB necessary for covering the entire service area in accordance with a beam select signal based on the specific signal, and transmits a communication signal to the terminal device 2 with the formed beam TB. Thus, the reception unit in the terminal device 2 is not saturated with respect to the beam TB emitted from the base station device 1, and as a result, the terminal device 2 can effectively communicate with the base station device 1, without impairing the communication performance as the terminal device 2.

Next, to facilitate understanding of a communication system according to the first embodiment, particularly, operations during the communication quality measurement period will be described on the basis of two simplified examples.

### Example 1

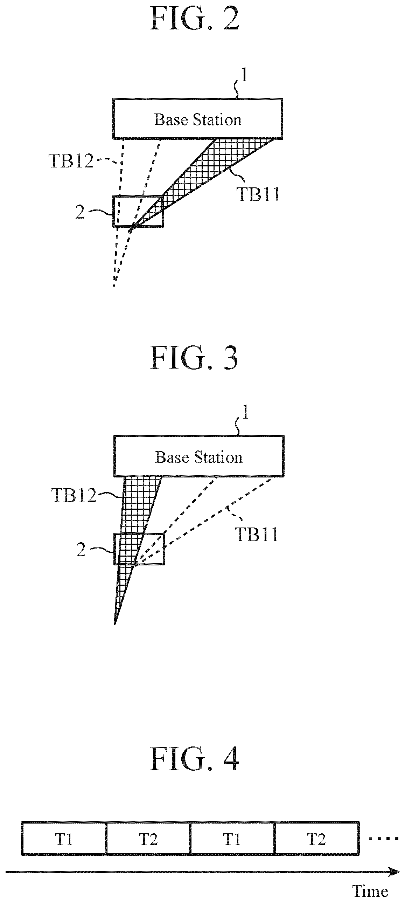

Example 1 is now described with reference to FIGS. 2 to 5.

In Example 1 described below, the number M of beams TB necessary for covering the entire service area is two, the number N of beams that can be simultaneously emitted is one, and one terminal device exists in the service area.

In FIGS. 2 to 5, one of the two beams is referred to as a beam TB11, and the other is referred to as a beam TB12. As shown in FIG. 4, a time slot in which the base station device 1 emits the beam TB11, or in which the terminal device 2 receives the beam TB11 is set as a time slot T1, and a time slot in which the base station device 1 emits the beam TB12, or in which the terminal device 2 receives the beam TB12 is set as a time slot T2. During the communication quality measurement period, the beam TB11 and the beam TB12 are repeatedly emitted from the base station device 1 in a time-division manner using the two time slot T1 and the time slot T2 respectively.

FIG. 2 is a schematic diagram showing a state in which the beam TB11 is emitted while the beam TB12 is stopped in the time slot T1. FIG. 3 is a schematic diagram showing a state in which the beam TB12 is emitted while the beam TB11 is stopped in the time slot T2.

Next, operations are described.

In the time slot T1, only the beam TB11 is formed, and a communication signal including communication data and an identification signal ID 11 indicating the individual information given to the beam TB11 is transmitted from the base station device 1 through the beam TB11.

At this point of time, for a reason that, for example, the distance from the emission source of the beam TB11 emitted from the base station device 1 is appropriate, the terminal device 2 determines that the received signal level which is the received power value of the communication signal in the beam TB11 is within a power range in which the reception unit of the terminal device 2 is not saturated, and thus determines that communication with the base station device 1 is valid. The terminal device 2 then transmits a specific signal to which a validity determination signal is added, to the base station device 1. At the same time, the terminal individual signal of the terminal device 2 is added to the specific signal.

That is, when receiving the beam TB 11 from the base station device 1 at the beam receiving antenna 21, the terminal device 2 measures the received power value of the communication signal in the received beam TB11 with the level detection unit 23, and associates the received power value corresponding to the beam TB11 with the identification signal ID corresponding to the beam TB11.

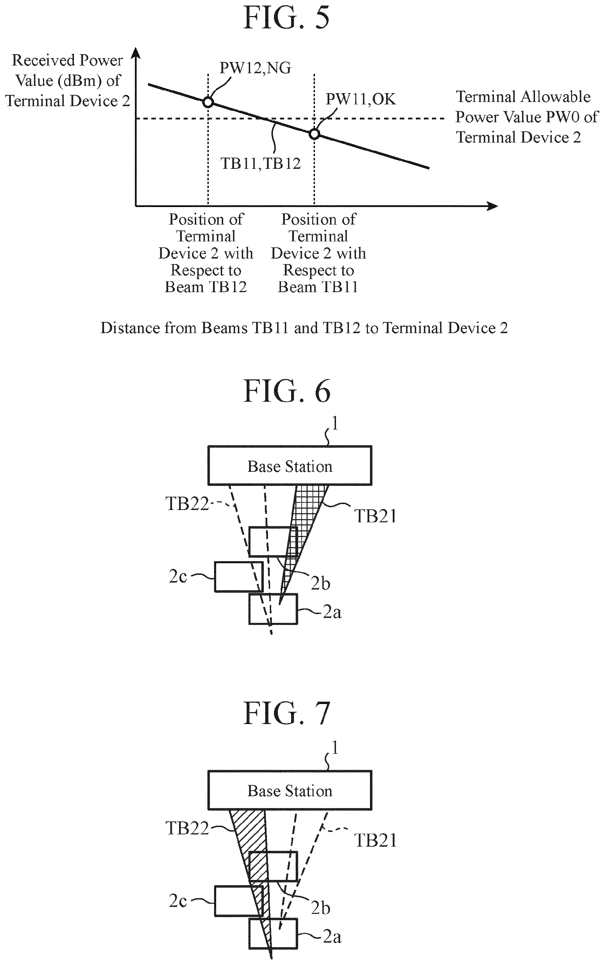

As for the associated information, the specific signal control unit 24 compares the received power value corresponding to the beam TB11 with the terminal allowable power value PW0 of the terminal device 2, and generates a specific signal on the basis of the comparison result. As shown in FIG. 5, the received power value of the terminal device 2 with respect to the distance from the emission source of the beam TB11 to the beam receiving antenna 21 of the terminal device 2 is the value indicating PW11 shown in FIG. 5, and this received power value PW11 is equal to or smaller than the terminal allowable power value PW0. The specific signal control unit 24 then generates a specific signal Y11, by adding a validity determination signal indicating that the received power value PW11 is valid (OK) for communication, to the identification signal ID11 for the received beam TB11. At the same time, the terminal individual signal of the terminal device 2 is added to the specific signal Y11.

The specific signal Y11 is modulated at the specific signal modulation unit 25, and is emitted as a beam RB11 from the ID transmitting antenna 26. The modulated specific signal Y11 is received by the ID receiving antenna 14 of the base station device 1.

In the base station device 1, the specific signal demodulation unit 15 demodulates the modulated specific signal Y11 received via the ID receiving antenna 14, and the beam control unit 13 outputs a beam select signal S11 based on the demodulated specific signal Y11, to the beam antenna unit 11. On the basis of the beam select signal S11, the beam antenna unit 11 forms the beam TB11 in the time slot T1, and transmits a communication signal with the beam TB11.

Next, in the time slot T2, only the beam TB12 is formed, and a communication signal including communication data and an identification signal ID12 indicating the individual information given to the beam TB12 is transmitted from the base station device 1 through the beam TB12.

At this point of time, for a reason that, for example, the distance from the emission source of the beam TB12 emitted from the base station device 1 is too short, the terminal device 2 determines that the received signal level which is the received power value of the communication signal in the beam TB12 is within a power range in which the reception unit of the terminal device 2 is saturated, and thus determines that the quality of communication with the base station device 1 will be degraded. Therefore, the terminal device 2 does not output any specific signal to the base station device 1.

That is, when receiving the beam TB12 from the base station device 1 at the beam receiving antenna 21, the terminal device 2 measures the received power value of the communication signal in the received beam TB12 with the level detection unit 23, and associates the received power value corresponding to the beam TB12 with the identification signal ID corresponding to the beam TB12.

As for the associated information, the specific signal control unit 24 compares the received power value corresponding to the beam TB12 with the terminal allowable power value of the terminal device 2. As shown in FIG. 5, the received power value of the terminal device 2 with respect to the distance from the emission source of the beam TB12 to the beam receiving antenna 21 of the terminal device 2 is the value indicating PW12 shown in FIG. 5, and this received power value PW12 is greater than the terminal allowable power value PW0. Therefore, the specific signal control unit 24 determines that the quality of communication will be degraded, and does not generate any specific signal.

In the base station device 1, the ID receiving antenna 14 does not receive any specific signal in response to the beam TB12 transmitted in the time slot T2, and therefore, the beam control unit 13 does not output the beam select signal for forming the beam TB12 to the beam antenna unit 11. As a result, the beam TB12 is not emitted from the beam antenna unit 11 in the time slot T2.

The base station device 1 also forms only the beam TB11 in the time slot T1 and transmits a communication signal with the beam TB11 during the period of communication with the terminal device 2 after the communication quality measurement period, and stops emission of any beam TB in the time slot T2.

As described above, in Example 1, during the communication quality measurement period, the terminal device 2 compares the received power value of a beam TB from the base station device 1 with the terminal allowable power value. If the received power value is equal to or smaller than the terminal allowable power value, a specific signal generated by adding the validity determination signal indicating validity for communication to the identification signal ID corresponding to the received beam TB is output. If the received power value is greater than the terminal allowable power value, any specific signal is not output. When receiving the specific signal from the terminal device 2, the base station device 1 generates the beam select signal, forms the corresponding beam TB, and transmits communication data with the beam TB. When receiving no specific signals, the base station device 1 does not generate any beam select signal, and does not emit any beam TB.

As a result, the base station device 1 emits a beam TB when the received power value of the beam TB received by the terminal device 2 is equal to or smaller than the terminal allowable power value, and the base station device 1 does not emit a beam TB when the received power value of the beam TB is greater than the terminal allowable power value. Thus, in the terminal device 2, communication with the base station device 1 does not saturate the reception unit of the terminal device 2, and high-quality communication can be performed, without any change in the shape, the orientation, and the output power of each beam TB formed by the base station device 1.

In Example 1 described above, when the received power value of a received beam TB is equal to or smaller than the terminal allowable power value PW0, the terminal device 2 outputs the specific signal Y11 to which the validity determination signal is added. When the received power value is greater than the terminal allowable power value, the terminal device 2 does not output any specific signal. When receiving the specific signal Y11 from the terminal device 2, the base station device 1 generates the beam select signal, and forms the corresponding beam TB. When receiving no specific signal, the base station device 1 does not generate the beam select signal, and does not emit the beam TB12. However, the following example may also be adopted.

That is, when the received power value of a beam TB received by the terminal device 2 is greater than the terminal allowable power value, a specific signal to which a determination signal is added is output. When the received power value is equal to or smaller than the terminal allowable power value, any specific signal is not output. When receiving the specific signal from the terminal device 2, the base station device 1 does not generate the beam select signal, and does not emit the beam TB12. When receiving no specific signal, the base station device 1 generates the beam select signal, forms the corresponding beam TB, and emits the beam TB.

Specifically, in the time slot T1, the specific signal control unit 24 determines that the received power value PW11 corresponding to the beam TB 11 is equal to or smaller than the terminal allowable power value PW0 and is valid for communication, and does not generate any specific signal. Since the base station device 1 does not receive any specific signal, the beam control unit 13 generates the beam select signal S11, and the beam antenna unit 11 forms the beam TB11 in the time slot T1 on the basis of the beam select signal S11, and transmits a communication signal with the beam TB11.

In the time slot T2, the specific signal control unit 24 determines that the received power value corresponding to the beam TB12 is greater than the terminal allowable power value PW0, or is within a power range in which the reception unit of the terminal device 2 is saturated, and thus determines that the quality of communication with the base station device 1 will be degraded. The specific signal control unit 24 then generates a specific signal N11 by adding an invalidity determination signal indicating invalidity of communication to the identification signal ID11 corresponding to the received beam TB11.

The specific signal N11 is modulated at the specific signal modulation unit 25, and is emitted as a beam RB11 from the ID transmitting antenna 26. The modulated specific signal N11 is received by the ID receiving antenna 14 of the base station device 1.

In the base station device 1, the specific signal demodulation unit 15 demodulates the modulated specific signal N11 received via the ID receiving antenna 14, and the beam control unit 13 does not generate the beam select signal S11 on the basis of the demodulated specific signal N11. The beam antenna unit 11 does not receive the beam select signal, and therefore, does not transmit the beam TB12 in the time slot T2.

The base station device 1 also forms only the beam TB11 in the time slot T1 and transmits a communication signal with the beam TB11 during the period of communication with the terminal device 2 after the communication quality measurement period, and stops emission of the beam TB12 in the time slot T2.

Thus, in a case where the specific signal N11 to which the invalidity determination signal is added is used, it is possible to achieve the same effects as those in a case where the specific signal Y11 to which the validity determination signal is added is used.

Also, in the case described above in Example 1, the time slot T1 and the time slot T2 in time division in the base station device 1 are equal even after the communication quality measurement period has passed. However, the time slot T1 in which the valid beam TB11 is emitted may be made longer than the time slot T2 in which the beam TB12 is stopped, or the ratio of the time slot T1 to the time slot T2 may be made higher. In this case, since the ratio of the time slot T1 for the beam TB11 is high, the quality of communication in the terminal device 2 with the base station device 1 can be increased, and further, the communication can be performed at a high rate.

Further, in Example 1 described above, the number of beams TB necessary for covering the entire service area is two. However, the same effects as above can also be achieved in a case where the number M of beams necessary for covering the entire service area is three or larger.

### Example 2

Example 2 is now described with reference to FIGS. 6 to 12.

In Example 2 described below, the number M of beams TB necessary for covering the entire service area is two, the number N of beams that can be simultaneously emitted is two, and three terminal devices 2a through 2c exist in the service area.

Each of the terminal devices 2a through 2c has the same configuration as the terminal device 2 shown in FIG. 1.

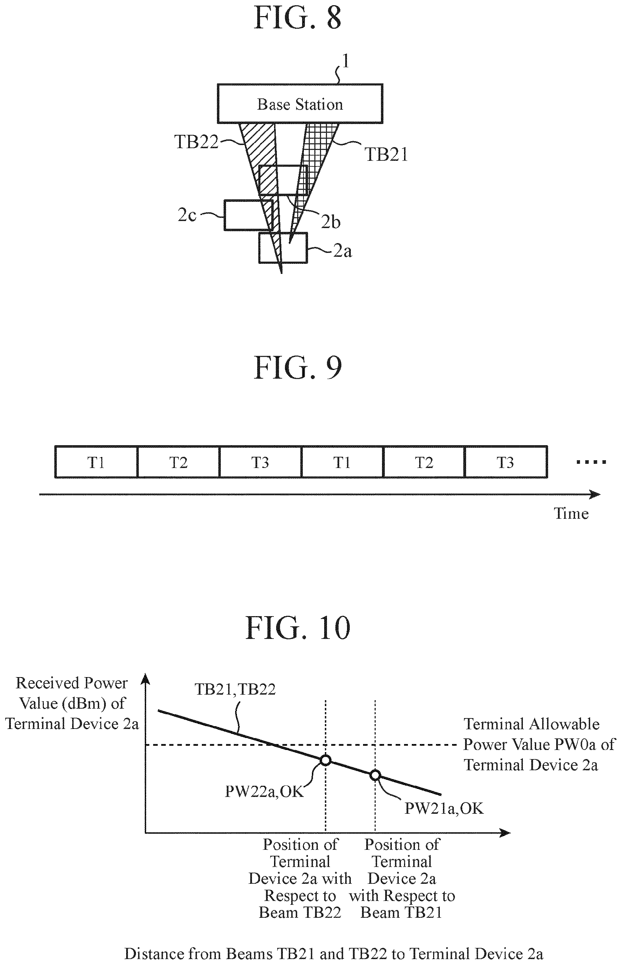

Further, as shown in FIG. 9, a time slot in which the base station device 1 emits a beam TB21, or in which the terminal device 2 receives the beam TB21 is set as a time slot T1, a time slot in which the base station device 1 emits a beam TB22, or in which the terminal device 2 receives the beam TB22 is set as a time slot T2, and a time slot in which the base station device 1 simultaneously emits the beam TB21 and the beam TB22, or in which the terminal device 2 simultaneously receives the beam TB21 and the beam TB22 is set as a time slot T3. During the communication quality measurement period, the single beam TB1, the single beam TB2, and the simultaneous beams TB 1 and TB2 are repeatedly emitted from the base station device 1 in a time-division manner using the three time slots T1 through T3 respectively.

FIG. 6 is a schematic diagram showing a state in which the beam TB21 is emitted while the beam TB22 is stopped in the time slot T1. FIG. 7 is a schematic diagram showing a state in which the beam TB22 is emitted while the beam TB21 is stopped in the time slot T2. FIG. 8 is a schematic diagram showing a state in which the beam TB11 and the beam TB12 are simultaneously emitted in the time slot T3.

Next, operations are described.

In the time slot T1, only the beam TB21 is formed, and a communication signal including communication data and an identification signal ID 11 indicating the individual information given to the beam TB21 is transmitted from the base station device 1 through the beam TB21.

At this point of time, for a reason that, for example, the distance from the emission source of the beam TB21 emitted from the base station device 1 is appropriate, the terminal device 2a determines that the received signal level which is the received power value of the beam TB21 is within a power range in which the reception unit of the terminal device 2a is not saturated, and thus determines that communication with the base station device 1 is valid. The terminal device 2a then transmits a specific signal to which a validity determination signal is added, to the base station device 1. At the same time, the terminal individual signal a of the terminal device 2a is added to the specific signal.

That is, when receiving the beam TB21 from the base station device 1 at the beam receiving antenna 21, the terminal device 2a measures the received power value of the communication signal in the received beam TB21 with the level detection unit 23, and associates the received power value corresponding to the beam TB21 with the identification signal ID corresponding to the beam TB21.

As for the associated information, the specific signal control unit 24 compares the received power value corresponding to the beam TB21 with the terminal allowable power value PW0a of the terminal device 2, and generates a specific signal on the basis of the comparison result. As shown in FIG. 10, the received power value of the terminal device 2a with respect to the distance from the emission source of the beam TB21 to the beam receiving antenna 21 of the terminal device 2a is the value indicating PW21a shown in FIG. 10, and this received power value PW21a is equal to or smaller than the terminal allowable power value PW0a. The specific signal control unit 24 then generates a specific signal Y21a, by adding a validity determination signal indicating that the received power value PW21a is valid (OK) for communication, to the identification signal ID21 for the received beam TB21. At the same time, the specific signal control unit 24 adds the terminal individual signal a of the terminal device 2a to the specific signal Y21a.

The specific signal Y21a is modulated at the specific signal modulation unit 25, and is emitted as a beam RB21a from the ID transmitting antenna 26.

In the base station device 1, the specific signal demodulation unit 15 demodulates the modulated specific signal Y21a received via the ID receiving antenna 14, and the beam control unit 13 outputs a beam select signal S21a based on the demodulated specific signal Y21a, to the beam antenna unit 11. On the basis of the beam select signal S21a, the beam antenna unit 11 forms the beam TB21 in the time slot T1, and transmits a communication signal to the terminal device 2a with the beam TB21.

Depending on the distance from the emission source of the beam TB21 from the base station device 1 and the angle θ1 with respect to the front direction, the terminal device 2b determines that the received signal level which is the received power value of the beam TB21 is within a power range in which the reception unit of the terminal device 2b is not saturated, and thus determines that communication with the base station device 1 is valid. The terminal device 2b then transmits a specific signal to which a validity determination signal is added, to the base station device 1. At the same time, the terminal individual signal b of the terminal device 2b is added to the specific signal.

That is, when receiving the beam TB21 from the base station device 1 at the beam receiving antenna 21, the terminal device 2b measures the received power value of the communication signal in the received beam TB21 with the level detection unit 23, and associates the received power value corresponding to the beam TB21 with the identification signal ID corresponding to the beam TB21.

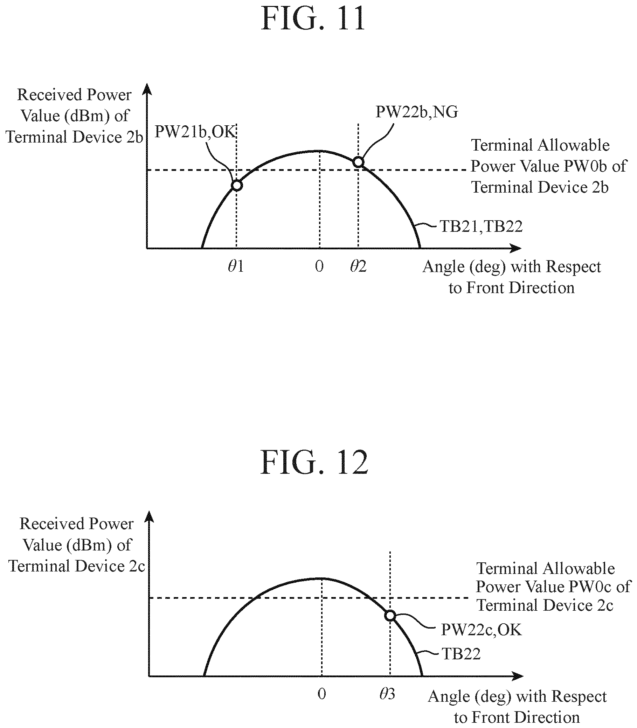

As for the associated information, the specific signal control unit 24 compares the received power value corresponding to the beam TB21 with the terminal allowable power value PW0b of the terminal device 2b, and generates a specific signal on the basis of the comparison result. As shown in FIG. 11, although the terminal device 2b is at a short distance from the emission source of the beam TB12 from the base station device 1, the received power value PW21b of the terminal device 2b is equal to or smaller than the terminal allowable power value PW0b due to the influence of the angle θ1 of the beam TB12 with respect to the terminal device 2b. The specific signal control unit 24 then generates a specific signal Y21b, by adding a validity determination signal indicating that the received power value PW21b is valid (OK) for communication, to the identification signal ID21 for the received beam TB21. At the same time, the specific signal control unit 24 adds the terminal individual signal b of the terminal device 2b to the specific signal Y21b.

The specific signal Y21b is modulated at the specific signal modulation unit 25, and is emitted as a beam RB21b from the ID transmitting antenna 26.

In the base station device 1, the specific signal demodulation unit 15 demodulates the modulated specific signal Y21b received via the ID receiving antenna 14, and the beam control unit 13 outputs a beam select signal S21b based on the demodulated specific signal Y21b, to the beam antenna unit 11. On the basis of the beam select signal S21b, the beam antenna unit 11 forms the beam TB21 in the time slot T1, and transmits a communication signal to the terminal device 2b with the beam TB21.

Because the terminal device 2c does not exist in the area covered by the beam TB21 from the base station device 1, the terminal device 2c determines that the received signal level corresponding to the beam TB21 is within a power range in which the S/N ratio of the reception unit of the terminal device 2 is not satisfied, and thus determines that communication with the base station device 1 cannot be performed. Accordingly, the terminal device 2c determines that the beam TB21 is invalid for communication, and does not output any specific signal to the base station device 1.

In the base station device 1, the ID receiving antenna 14 does not receive any specific signal in response to the beam TB21 transmitted to the terminal device 2c in the time slot T1, and therefore, the beam control unit 13 does not output the beam select signal for forming the beam TB21 to the beam antenna unit 11. As a result, the beam TB21 is not emitted from the beam antenna unit 11 to the terminal device 2c in the time slot T1.

Next, in the time slot T2, only the beam TB22 is formed, and a communication signal including communication data and an identification signal ID22 indicating the individual information given to the beam TB22 is transmitted from the base station device 1 through the beam TB22.

At this point of time, for a reason that, for example, the distance from the emission source of the beam TB22 emitted from the base station device 1 is appropriate, the terminal device 2a determines that the received signal level which is the received power value of the beam TB22 is within a power range in which the reception unit of the terminal device 2a is not saturated, and thus determines that communication with the base station device 1 is valid. The terminal device 2a then transmits a specific signal to which a validity determination signal is added, to the base station device 1. At the same time, the terminal individual signal a of the terminal device 2a is added to the specific signal.

The terminal device 2a operates in the same manner as in the time slot T1, and, as shown in FIG. 10, the received power value PW22a is equal to or smaller than the terminal allowable power value PW0a, and thus the specific signal control unit 24 generates a specific signal Y22a, by adding a validity determination signal indicating that the received power value PW22a is valid (OK) for communication, to the identification signal ID22 for the received beam TB22.

The specific signal Y22a is modulated at the specific signal modulation unit 25, and is emitted as a beam RB22a from the ID transmitting antenna 26.

In the base station device 1, the specific signal demodulation unit 15 demodulates the modulated specific signal Y22a received via the ID receiving antenna 14, and the beam control unit 13 outputs a beam select signal S22a based on the demodulated specific signal Y22a, to the beam antenna unit 11. On the basis of the beam select signal S22a, the beam antenna unit 11 forms the beam TB22 in the time slot T1, and transmits a communication signal with the beam TB22.

Depending on the distance from the emission source of the beam TB22 from the base station device 1 and the angle θ2 with respect to the front direction, the terminal device 2b determines that the received signal level which is the received power value of the beam TB22 is within a power range in which the reception unit of the terminal device 2a is saturated, and thus determines that the quality of communication with the base station device 1 will be degraded. Therefore, the terminal device 2b does not output any specific signal to the base station device 1.

That is, when receiving the beam TB22 from the base station device 1 at the beam receiving antenna 21, the terminal device 2b measures the received power value of the communication signal in the received beam TB22 with the level detection unit 23, and associates the received power value corresponding to the beam TB22 with the identification signal ID corresponding to the beam TB22.

As for the associated information, the specific signal control unit 24 compares the received power value PW22b corresponding to the beam TB22 with the terminal allowable power value PW0b of the terminal device 2b. As shown in FIG. 11, the terminal device 2b is at a short distance from the emission source of the beam TB22 from the base station device 1, and is hardly affected by the angle θ2 of the beam TB22 with respect to the terminal device 2b. Therefore, the terminal device 2b determines that the received power value PW22b corresponding to the beam TB22 is greater than the terminal allowable power value PW0b, and thus determines that communication quality will be degraded. The specific signal control unit 24 does not generate any specific signal, accordingly.

In the base station device 1, the ID receiving antenna 14 does not receive any specific signal in response to the beam TB22 transmitted to the terminal device 2b in the time slot T2, and therefore, the beam control unit 13 does not output the beam select signal for forming the beam TB22 to the beam antenna unit 11. As a result, the beam TB22 is not emitted from the beam antenna unit 11 to the terminal device 2b in the time slot T2.

Depending on the distance from the emission source of the beam TB22 from the base station device 1 and the angle θ3 with respect to the front direction, the terminal device 2c determines that the received signal level which is the received power value of the beam TB22 is within a power range in which the reception unit of the terminal device 2c is not saturated, and thus determines that communication with the base station device 1 is valid. The terminal device 2c then transmits a specific signal to which a validity determination signal is added, to the base station device 1. At the same time, the terminal individual signal c of the terminal device 2c is added to the specific signal.

That is, when receiving the beam TB22 from the base station device 1 at the beam receiving antenna 21, the terminal device 2c measures the received power value of the communication signal in the received beam TB22 with the level detection unit 23, and associates the received power value corresponding to the beam TB22 with the identification signal ID corresponding to the beam TB22.

As for the associated information, the specific signal control unit 24 compares the received power value corresponding to the beam TB22 with the terminal allowable power value PW0c of the terminal device 2c, and generates a specific signal on the basis of the comparison result. As shown in FIG. 12, although the terminal device 2c is at a short distance from the emission source of the beam TB22 from the base station device 1, the received power value PW22c of the terminal device 2c is equal to or smaller than the terminal allowable power value PW0c due to the influence of the angle θ3 of the beam TB22 with respect to the terminal device 2c. The specific signal control unit 24 then generates a specific signal Y22c, by adding a validity determination signal indicating that the received power value PW22c is valid (OK) for communication, to the identification signal ID22 for the received beam TB22. At the same time, the specific signal control unit 24 adds the terminal individual signal c of the terminal device 2c to the specific signal Y22c.

The specific signal Y22c is modulated at the specific signal modulation unit 25, and is emitted as a beam RB22c from the ID transmitting antenna 26.

In the base station device 1, the specific signal demodulation unit 15 demodulates the modulated specific signal Y22c received via the ID receiving antenna 14, and the beam control unit 13 outputs a beam select signal S22c based on the demodulated specific signal Y22c, to the beam antenna unit 11. On the basis of the beam select signal S22c, the beam antenna unit 11 forms the beam TB22 in the time slot T2, and transmits a communication signal to the terminal device 2c with the beam TB22.

In the time slot T3, the beam TB21 and the beam TB22 are formed, and a first communication signal including communication data and the identification signal ID22 indicating the individual information given to the beam TB21 and a second communication signal including communication data and the identification signal ID22 indicating the individual information given to the beam TB22 are transmitted from the base station device 1 through the beam TB21 and the beam TB22, respectively. At this point of time, as for the beam TB21 and the beam TB22 from the base station device 1, the terminal device 2a determines that the received signal levels which are the received power values of the communication signals in the beam TB21 and the beam TB22 are within a power range in which the reception unit of the terminal device 2 is not saturated, and thus determines that communication with the base station device 1 is valid, as described above about the periods of the time slot T1 and the time slot T2. The terminal device 2a then transmits a specific signal to which a validity determination signal is added, to the base station device 1. At the same time, the terminal individual signal a of the terminal device 2a is added to the specific signal.

That is, when receiving the beam TB21 and the beam TB22 from the base station device 1 at the beam receiving antenna 21, the terminal device 2a measures each of the received power values of the communication signals in the received beam TB21 and beam TB22 with the level detection unit 23, and associates the received power values corresponding to the beam TB21 and the beam TB22 with the identification signals ID corresponding to the beam TB21 and the beam TB22.

As for the associated information, the specific signal control unit 24 compares the received power value PW21a and the received power value PW22a corresponding to the beam TB21 and the beam TB22 with the terminal allowable power value PW0a of the terminal device 2, and generates a specific signal on the basis of the comparison result. In other words, the specific signal control unit 24 generates a specific signal Y23a, by adding a validity determination signal indicating validity (OK) for communication, to the identification signal ID21 and the identification signal ID22 corresponding to the received beam TB21 and beam TB22. At the same time, the specific signal control unit 24 adds the terminal individual signal a of the terminal device 2a to the specific signal Y23a.

The specific signal Y23a is modulated at the specific signal modulation unit 25, and is emitted as a beam RB23a from the ID transmitting antenna 26.

In the base station device 1, the specific signal demodulation unit 15 demodulates the modulated specific signal Y23a received via the ID receiving antenna 14, and the beam control unit 13 outputs a beam select signal S23a based on the demodulated specific signal Y23a, to the beam antenna unit 11. On the basis of the beam select signal S23a, the beam antenna unit 11 simultaneously forms the beam TB21 and the beam TB22 in the time slot T3, and transmits communication signals with the beam TB21 and the beam TB22.

Although the received signal level that is the received power value of the beam TB21 is within a power range in which the reception unit of the terminal device 2b is not saturated as described above about the period of the time slot T1, the received signal level that is the received power value of the beam TB22 is within a power range in which the reception unit of the terminal device 2b is saturated as described above about the period of the time slot T2. Therefore, the terminal device 2b does not output any specific signal to the base station device 1.

In the base station device 1, the beam antenna unit 11 does not emit the beam TB21 and the beam TB22 to the terminal device 2b in the time slot T3.

Although the terminal device 2c does not exist in the area to be covered by the beam TB21 as described above about the period of the time slot T1, the received signal level that is the received power value of the beam TB22 is within a power range in which the reception unit of the terminal device 2c is not saturated as described above about the period of the time slot T2.

Therefore, the following three kinds of measures are conceivable, and any of these kinds of measures may be taken.

Firstly, the terminal device 2c does not output any specific signal to the base station device 1.

In the base station device 1, the beam antenna unit 11 does not emit the beam TB21 and the beam TB22 to the terminal device 2c in the time slot T3.

Secondly, the terminal device 2c generates a specific signal Y23c, by adding a validity determination signal indicating validity (OK) for communication, to the identification signal ID21 and the identification signal ID22 corresponding to the received beam TB21 and beam TB22. At the same time, the terminal individual signal c of the terminal device 2c is added to the specific signal Y23c.

As a result, the base station device 1 simultaneously forms the beam TB21 and the beam TB22 in the time slot T3 for the terminal device 2c, and transmits a communication signal with the beam TB22.

Thirdly, the terminal device 2c generates a specific signal Y23c, by adding a validity determination signal indicating validity (OK) for communication, to the identification signal ID22 corresponding to the received beam TB22. At the same time, the terminal individual signal c of the terminal device 2c is added to the specific signal Y23c.

As a result, the base station device 1 forms the beam TB22 in the time slot T3 for the terminal device 2c, and transmits a communication signal with the beam TB22. The beam TB21 is not formed, and emission of the beam TB21 is stopped.

The third method has the effect to increase the quality of communication in the terminal device 2c with the base station device 1, and enable the communication at a high rate.

As described above, in Example 1, as for the terminal device 2a, the beam TB21 and the beam TB22 are the valid beams during the period of communication between the terminal device 2a and the base station device 1 after the communication quality measurement period has passed. Accordingly, from the base station device 1, the beam TB21 can be emitted in the time slot T1, the beam TB22 can be emitted in the time slot T2, and the beam TB21 and the beam TB22 can be simultaneously emitted in the time slot T3. Thus, high-quality communication can be performed between the terminal device 2a and the base station device 1, without saturation at the reception unit in the terminal device 2a.

Also, as for the terminal device 2b, the beam TB21 is the valid beam during the period of communication between the terminal device 2b and the base station device 1 after the communication quality measurement period has passed. Accordingly, from the base station device 1, the beam TB21 can be emitted in the time slot T1, and emission of any beam TB can be stopped in the time slot T2 and the time slot T3. Thus, high-quality communication can be performed between the terminal device 2b and the base station device 1, without saturation at the reception unit in the terminal device 2b.

Further, as for the terminal device 2c, the beam TB22 is the valid beam during the period of communication between the terminal device 2c and the base station device 1 after the communication quality measurement period has passed, and the terminal device 2c does not exist in the area to be covered by the beam TB21. Therefore, from the base station device 1, emission of the beam TB21 can be stopped in the time slot T1, the beam TB22 can be emitted in the time slot T2, and emission of the beam TB21 and the beam TB22 can be stopped, the beam TB21 and the beam TB22 can be simultaneously emitted, or only the beam TB22 can be emitted in the time slot T3. Thus, high-quality communication with the base station device 1 can be performed in the terminal device 2c, without saturation at the reception unit in the terminal device 2c.

As described above, in Example 2, depending on the positional relationship of each of the terminal devices 2a through 2c to the base station device 1, a valid beam TB is selected from a plurality of beams TB, and communication between the base station device 1 and each of the terminal devices 2a through 2c is performed. Thus, it is possible to avoid saturation of the reception units of the terminal devices 2a through 2c in the service area of the base station device 1, and conduct high-quality communication between the base station device 1 and each of the terminal devices 2a through 2c, without any change in the shape, the orientation, and the output power of each beam TB to be formed by the base station device 1.

Note that, in Example 2 described above, specific signals Y2** to each of which a validity determination signal is added are used as the specific signal Y21a, the specific signal Y21b, the specific signal Y22a, the specific signal Y22c, the specific signal Y23a, and the specific signal Y23c. However, specific signals N2** to each of which an invalidity determination signal is added may be used as in Example 1. In this case, the same effects as above can also be achieved.

Also, in the case described above in Example 2, the time slots T1 through T3 in time division in the base station device 1 are equal even after the communication quality measurement period has passed. However, a time slot T* in which a valid beam TB** is emitted may be made longer than a time slot T* in which a beam TB** is stopped. In this case, as the ratio of a time slot T* for a beam TB** is higher than that of a time slot T* for stopping a beam TB**, the quality of communication in the terminal devices 2a through 2c with the base station device 1 can be increased, and further, the communication can be performed at a high rate.

Further, in Example 1 described above, the number of beams TB necessary for covering the entire service area is two. However, the same effects as above can also be achieved in a case where the number M of beams necessary for covering the entire service area is three or larger.

### Second Embodiment

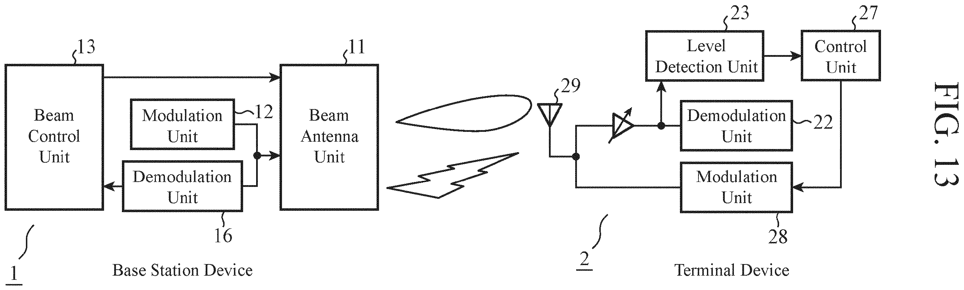

A wireless communication system according to a second embodiment of the present invention is now described with reference to FIG. 13.

The wireless communication system according to the second embodiment differs from the wireless communication system according to the first embodiment in the following aspects.

Firstly, while the wireless communication system according to the first embodiment includes the specific signal demodulation unit 15 and the ID receiving antenna 14 in the base station device 1, the wireless communication system according to the second embodiment has a beam antenna unit 11 serving as the ID receiving antenna 14 in the base station device 1, and incorporates the function of the specific signal demodulation unit 15 into a demodulation unit 16 that is normally used in a base station device 1 in this technical field.

Secondly, while the wireless communication system according to the first embodiment includes the specific signal control unit 24, the specific signal modulation unit 25, and the ID transmitting antenna 26 in each terminal device 2, the wireless communication system according to the second embodiment includes a beam transmitting and receiving antenna 29 that serves as both the beam receiving antenna 21 and the ID transmitting antenna 26, and incorporates the function of the specific signal control unit 24 into a control unit 27 and the function of the specific signal modulation unit 25 into a modulation unit 28, the control unit 27 and the modulation unit 28 being normally used in a terminal device 2 in this technical field.

In the description below, the differences from the wireless communication system according to the first embodiment will be mainly explained. Note that, in FIG. 13, the same reference numerals as those in FIG. 1 indicate the same or corresponding components.

The beam antenna unit 1 transmits and receives beams by time division duplex (TDD) or frequency division duplex (FDD).

The demodulation unit 16 demodulates a reception beam received via the beam antenna unit 11, as is normally performed in this technical field, during a normal operation in the base station device 1. In conjunction with the demodulation that is normally performed, the demodulation unit 16 further demodulates a modulated specific signal received via the beam antenna unit 11, and outputs the demodulated specific signal to the beam control unit 13.

The beam transmitting and receiving antenna 29 transmits and receives beams by time division duplex (TDD) or frequency division duplex (FDD).

The control unit 27 performs control that is normally performed in this technical field, during a normal operation in the terminal device 2. In conjunction with the control that is normally performed, the control unit 27 further compares the received power value corresponding to a beam TB input from the level detection unit 23 with the terminal allowable power value of the terminal device 2, and generates a specific signal for selecting the beam TB from among the beams TB that are formed at the base station device 1 and are necessary for covering the entire service area.

The modulation unit 28 performs modulation that is normally performed in this technical field, during a normal operation in the terminal device 2. The modulation unit 28 further modulates the specific signal generated by the control unit 27, and outputs the modulated specific signal to the beam transmitting and receiving antenna 29.

The wireless communication system according to the second embodiment designed as above also achieves the same effects as those in the wireless communication system according to the first embodiment.

Further, in the base station device 1, the demodulation unit 16 that is normally used in this technical field has a function of demodulating a modulated specific signal received via the beam antenna unit 11, so that the effect that a change needs to be made only to software can be achieved.

Also, in the terminal device 2, the control unit 27 that is normally used in this technical field has a function of generating a specific signal for selecting a beam TB, so that the effect that a change needs to be made only to software can be achieved.

Note that, in the first embodiment and the second embodiment described above, the base station device 1 is not necessarily formed with a single base station device that forms a plurality of beams necessary for covering the entire service area, and emits the plurality of beams to transmit communication signals in a time-division manner with the respective beams. Instead, the base station device 1 may be formed as an aggregate that includes a plurality of base station devices each emitting one beam.

Note that, within the scope of the present invention, modifications may be made to any component of the embodiments, or any component may be omitted from each embodiment.

### REFERENCE SIGNS LIST

1: base station device, 2, 2a to 2c: terminal device, 11: beam antenna unit, 13: beam control unit, 14: ID receiving antenna, 15: specific signal demodulation unit, 16: demodulation unit, 21: beam receiving antenna, 23: level detection unit, 24: specific signal control unit, 25: specific signal modulation unit, 26: ID transmitting antenna, 27: control unit, 28: modulation unit, 29: transmitting and receiving antenna, TB11, TB12, TB21, TB22: beam

## Claims

1. A wireless communication system comprising:
a base station device for forming a plurality of beams necessary for covering an entire service area, and transmitting a communication signal with each of the plurality of beams in a time-division manner; and
a terminal device for receiving the beams emitted from the base station device, wherein
communication from the base station device to the terminal device is conducted with a beam-forming technique,
the terminal device compares a received power value of the communication signal in each of the plurality of beams received from the base station device with a terminal allowable power value of the terminal device, and, on a basis of a result of the comparison, transmits a specific signal for selecting a beam from the plurality of beams, to the base station device, and
the base station device receives the specific signal from the terminal device, selects a beam from the plurality of beams in accordance with a beam select signal based on the received specific signal, and transmits a communication signal with the selected beam in a time-division manner.

2. The wireless communication system according to claim 1, wherein
the communication signal in each of the plurality of beams from the base station device includes communication data and an identification signal indicating individual information given to a corresponding one of the plurality of beams,
the specific signal from the terminal device is a signal generated by adding a validity determination signal to an identification signal corresponding to a beam in the plurality of beams received by the terminal device, the validity determination signal indicating that a received power value of a communication signal in the received beam is valid for communication when the received power value is equal to or smaller than the terminal allowable power value of the terminal device, and
the beam select signal in the base station device is a signal for selecting a beam corresponding to the identification signal included in the specific signal received by the base station device.

3. The wireless communication system according to claim 2, wherein a time slot for the beam selected with the beam select signal has a longer time than a time slot for a beam not selected with the beam select signal.

4. The wireless communication system according to claim 1, wherein
the communication signal in each of the plurality of beams from the base station device includes communication data and an identification signal indicating individual information given to a corresponding one of the plurality of beams,
the specific signal from the terminal device is a signal generated by adding an invalidity determination signal to an identification signal corresponding to a beam in the plurality of the beams received by the terminal device, the invalidity determination signal indicating that a received power value of a communication signal in the received beam is invalid for communication when the received power value is greater than the terminal allowable power value of the terminal device, and
the beam select signal in the base station device is a signal for deselecting a beam corresponding to the identification signal included in the specific signal received by the base station device.

5. The wireless communication system according to claim 4, wherein a time slot for a beam deselected with the beam select signal has a shorter time than a time slot for the beam selected with the beam select signal.

6. A terminal device in which communication using a beam-forming technique is performed with a plurality of beams from a base station device, the terminal device comprising:
a level detection unit for measuring a received power value of a communication signal in each of the plurality of beams received from the base station device;
a control unit for comparing the received power value measured at the level detection unit with a terminal allowable power value of the terminal device, and generating a specific signal for selecting a beam from the plurality of beams on a basis of a result of the comparison;
a modulation unit for modulating the specific signal generated by the control unit; and
a transmitting antenna for emitting, as a beam, the specific signal modulated at the modulation unit.

7. The terminal device according to claim 6, wherein the specific signal is a signal generated by adding a validity determination signal to an identification signal corresponding to a beam in the received plurality of beams, the validity determination signal indicating that a received power value of a communication signal in the received beam is valid for communication when the received power value is equal to or smaller than the terminal allowable power value of the terminal device.

8. The terminal device according to claim 6, wherein the specific signal is a signal generated by adding an invalidity determination signal to an identification signal corresponding to a beam in the received plurality of beams, the invalidity determination signal indicating that a received power value of a communication signal in the received beam is invalid for communication when the received power value is greater than the terminal allowable power value of the terminal device.

9. Abase station device in which communication with a terminal device is performed using a beam-forming technique, the base station device comprising:
a beam antenna unit for forming a beam specified on a basis of a beam select signal, from among a plurality of beams necessary for covering an entire service area, and transmitting a communication signal with the specified beam in a time-division manner,
a receiving antenna for receiving a modulated specific signal transmitted from the terminal device, wherein the terminal device compares a received power value of a communication signal in each of the plurality of beams received by the terminal device with a terminal allowable power value of the terminal device, and generates the specific signal for selecting a beam from the plurality of beams on a basis of a result of the comparison;
a demodulation unit for demodulating the specific signal received by the receiving antenna; and
a beam control unit for receiving the demodulated specific signal from the demodulation unit and outputting the beam select signal based on the demodulated beam specific signal to the beam antenna unit.

10. The base station device according to claim 9, wherein
the specific signal is a signal generated by adding a validity determination signal to an identification signal corresponding to a beam in the plurality of the beams received by the terminal device, the validity determination signal indicating that a received power value of a communication signal in the received beam is valid for communication when the received power value is equal to or smaller than the terminal allowable power value of the terminal device, and
the select signal is a signal for selecting a beam corresponding to the identification signal included in the received specific signal.

11. The base station device according to claim 9, wherein
the specific signal is a signal generated by adding an invalidity determination signal to an identification signal corresponding to a beam in the plurality of beams received by the terminal device, the invalidity determination signal indicating that a received power value of a communication signal in the received beam is invalid for communication when the received power value is greater than the terminal allowable power value of the terminal device, and
the beam select signal is a signal for deselecting a beam corresponding to the identification signal included in the received specific signal.

12. A wireless communication method of performing communication using a beam-forming technique, from a base station device that forms a plurality of beams necessary for covering an entire service area, and transmits a communication signal with each of the plurality of beams in a time-division manner, to a terminal device that receives the beams emitted from the base station device, the wireless communication method comprising:
a determining step of, in the terminal device, comparing a received power value of the communication signal in each of the plurality of beams received from the base station device with a terminal allowable power value of the terminal device, and, on a basis of a result of the comparison, determining that a beam in the received beams with which a reception unit of the terminal device is not saturated is valid;
a notifying step of notifying the base station device of an identification signal of the beam determined to be valid in the determining step; and
a selecting and transmitting step of, in the base station device, selecting the beam corresponding to the identification signal and transmitting a communication signal with the selected beam in a time-division manner, to the terminal device from which the identification signal has been sent in the notifying step.

13. A wireless communication method of performing communication using a beam-forming technique, from a base station device that forms a plurality of beams necessary for covering an entire service area, and transmits a communication signal with each of the plurality of beams in a time-division manner, to a terminal device that receives the beams emitted from the base station device, the wireless communication method comprising:
a determining step of, in the terminal device, comparing a received power value of the communication signal in each of the plurality of beams received from the base station device with a terminal allowable power value of the terminal device, and, on a basis of a result of the comparison, determining that a beam in the received beams with which a reception unit of the terminal device is saturated is invalid;
a notifying step of notifying the base station device of an identification signal of the beam determined to be invalid in the determining step; and
a deselecting and transmitting step of, in the base station device, deselecting the beam corresponding to the identification signal and transmitting a communication signal with a beam other than the deselected beam in a time-division manner, to the terminal device from which the identification signal has been sent in the notifying step.
